# EUROPÄISCHE PATENTSCHRIFT

(11) **EP 0 496 227 B1**
(45) Veröffentlichungstag und Bekanntmachung des Hinweises auf die Patenterteilung: **25.05.1994**
(21) Anmeldenummer: 92100388.5
(22) Anmeldetag: 11.01.1992
(51) Int. Cl.: F16K 3/08, F16K 11/02

(54) **Ventiloberteil**
Valve top
Partie supérieure de soupape

(30) Priorität: 23.01.1991 DE 4101836
(43) Veröffentlichungstag der Anmeldung: 29.07.1992
(73) Patentinhaber: ANTON TRÄNKLE KG, 78098 Triberg (DE)
(72) Erfinder: Stoll, Jörg Michael, W-7740 Triberg (DE); Koch, Rudolf, W-7740 Triberg (DE)
(74) Vertreter: Patentanwälte Westphal, Buchner, Mussgnug Neunert, Göhring

(56) Entgegenhaltungen:
- DE-A- 3 127 714
- DE-A- 3 714 450
- DE-A- 3 829 757
- FR-A- 2 645 236

## Beschreibung

Die Erfindung betrifft ein Ventiloberteil, insbesondere für Wasserarmaturen, nach dem Oberbegriff des Anspruchs 1.

Aus der DE-A- 37 14 450 ist ein Ventiloberteil dieser Art bekannt.

Bei der Lagerung der Spindel im Kopfstück kommt das bekannte Ventiloberteil nicht ganz ohne metallische Führungs- und Gleitteile aus. Außerdem ist die Herstellung und Montage verhältnismäßig aufwendig. Die Spindel ist nicht axialdruckfrei gelagert und es liegen nicht alle Gleitteile in dem durch die Fettkammer gebildeten wasserfreien Raum.

Die Erfindung zielt darauf ab, die Lagerung der Spindel im Kopfstück bei einem solchen Ventiloberteil zu verbessern sowie die Fertigung zu vereinfachen und zu verbilligen.

Diese Aufgabe wird erfindungsgemäß durch die kennzeichnenden Merkmale des Anspruchs 1 gelöst.

Die abhängigen Ansprüche 2 bis 9 betreffen zweckmäßige Weiterbildungen der Erfindung.

Durch die axiale und radiale Gleitlagerkombination gemäß der Erfindung tritt keine metallische Berührung im System auf. Durch das Vermeiden der Metallreibung, die zu Metallabrieb führen könnte, wird die Lebensdauer des Ventiloberteiles bei langem Gebrauch im Vergleich mit bekannten Ventiloberteilen stark verbessert.

Leichtgängigkeit und langfristige spielfreie Lagerung sind gewährleistet, da engste Fertigungstoleranzen möglich sind. Die Axialabstützung nimmt den gesamten Axialdichtdruck auf, und die Spindel ist dadurch axialdruckfrei und unterliegt keinem Verschleiß. Das Axiallagerspiel ist exakt bestimmbar. Das ganze Ventiloberteil kann trotz der hervorragenden Lagerung in Standardbaumaßnahmen hergestellt werden, und darüber hinaus können kleinere Ausgangsmaterialdurchmesser der Spindel eingesetzt werden. Besonders vorteilhaft ist die Anordnung des Gleitrings und der damit gleitenden axialen und radialen Abstützung des Steuerblocks innerhalb der gegen die Flüssigkeit bzw. das Wasser abgedichteten Fettkammer, wobei die Fettfüllung in der Kammer für eine Dauerbefettung der Lagerflächen sorgt. Die Fettfüllung kann nicht ausgewaschen werden und tritt somit in der Flüssigkeit, z.B. Trinkwasser, nicht auf. Daraus resultiert eine völlige physiologische Unbedenklichkeit.

Besonders zweckmäßig ist die Ausführungsform gemäß Anspruch 2, da das aus Lagerelement und Dämpfungsglied bestehende einstückige Bauteil sehr einfach montierbar ist.

Dabei kann eine einfache, durch Einstecken und/oder Einschnappen herstellbare drehfeste Verbindung gemäß Anspruch 3 erreicht werden.

Zur Verbesserung der Gleiteigenschaften und der Lebensdauer des Gleitlagers zwischen Lagerelement und Kopfstück kann in vorteilhafter Ausgestaltung der Erfindung eine Schmierung gemäß den Ansprüchen 4 und 5 vorgenommen werden.

Zur noch besseren Abstützung des Lagerelements im Kopfstück kann sich gemäß Anspruch 6 die Stützfläche noch in den außerhalb der Fettkammer, also nicht abgedichteten Bereich hinein wenigstens mit einem kurzen Abschnitt erstrecken, wodurch der an dieser Stelle abdichtende Dichtungsring praktisch in eine Nut der gesamten radialen Stützfläche zu liegen kommt. Wenn ausnahmsweise die Reibung infolge der günstigen Gleiteigenschaften und Schmierung des Lagers zu gering ist, kann in weiterer Ausbildung gemäß Anspruch 7 innerhalb der Fettkammer ein die Reibung erhöhender zusätzlicher O-Ring vorgesehen werden, was insbesondere bei größeren Griffen, vorzugsweise Hebelgriffen am Ventil, sowie an wandmontierten Armaturen, zweckmäßig sein kann.

Die Anströmung des Ventiloberteils kann in vorteilhafter Weiterbildung der Erfindung gemäß den Ansprüchen 8 und 9 durch besondere Ausgestaltung von Ausström- und Führungskanal auch bei kleineren Durchsätzen, die sonst zu starken Turbulenzen und somit zu starker Geräuschbildung führen, sehr geräuscharm gehalten werden.

Anhand der Figuren werden vorteilhafte Ausführungsbeispiele der Erfindung näher erläutert. Es zeigt:
- Fig. 1: eine Explosionsdarstellung des erfindungsgemäßen Ventiloberteils,
- Fig. 2: eine Stirnansicht gemäß dem Pfeil II in Fig. 1,
- Fig. 3: einen Schnitt längs der Linie III-III in Fig. 1,
- Fig. 4: eine Stirnansicht gemäß dem Pfeil IV in Fig. 1,
- Fig. 5: eine in der rechten Hälfte geschnittene Seitenansicht einer ersten Ausführungsform des zusammengesetzten Ventiloberteils gemäß Figuren 1 bis 4,
- Fig. 6: eine Stirnansicht des aus Lagerelement und Dämpfungsglied bestehenden Bauteils gemäß Fig. 5 von oben,
- Fig. 7: eine Stirnansicht des in Fig. 6 gezeigten Bauteils von unten,
- Fig. 8: eine in der rechten Hälfte gemäß der Linie VIII-VIII in Fig. 7 geschnittene Teilseitenansicht des in den Figuren 6 und 7 gezeigten Bauteils,
- Fig. 9: eine in der rechten Hälfte gemäß der Linie IX-IX in Fig. 7 geschnittene Seitenansicht des in den Figuren 6 und 7 gezeigten Bauteils,
- Fig. 10: eine der Fig. 5 entsprechende teilweise geschnittene Seitenansicht einer zweiten Ausführungsform des zusammengesetzten Ventiloberteils,
- Fig. 11: eine der Fig. 6 entsprechende Stirnansicht des aus Lagerelement und Dämpfungsglied bestehenden Bauteils der zweiten Ausführungsform gemäß Fig. 5,
- Fig. 12: eine der Fig. 9 entsprechende Darstellung des in Fig. 11 gezeigten Bauteils.

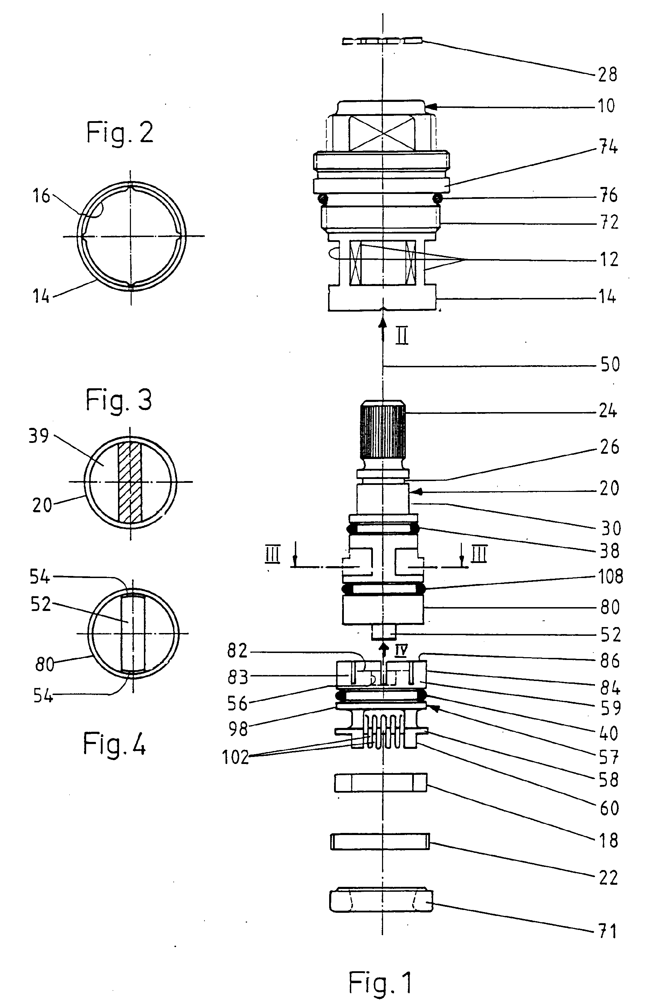

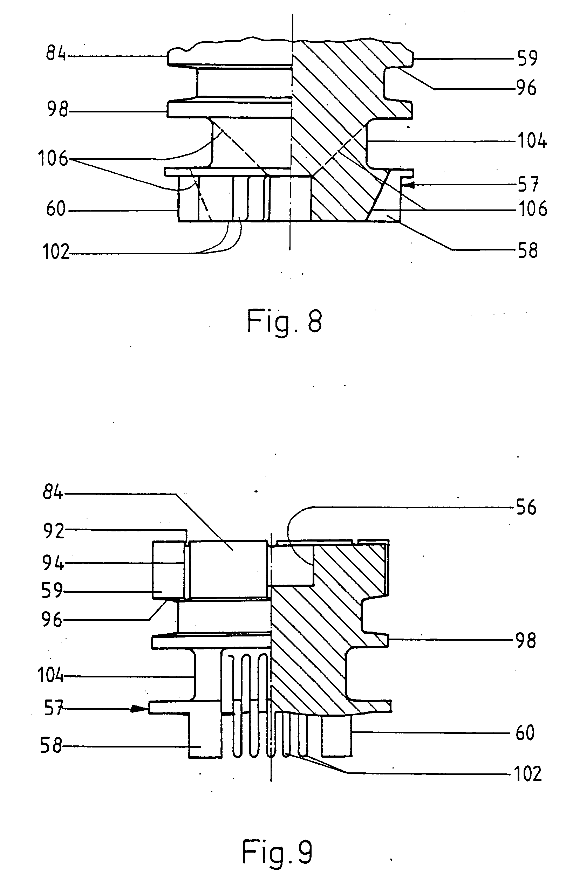

Die in den Figuren 1 bis 9 dargestellte erste Ausführungsform des erfindungsgemäßen Ventiloberteils besteht im wesentlichen aus zwei ineinander gefügten und gegeneinander drehbaren Hauptteilen, nämlich dem das Ventilgehäuse bildenden Kopfstück 10 und der im Innenraum des Kopfstücks 10 mit engen Toleranzen drehbar aufgenommenen Spindel 20. Das Kopfstück 10 weist in seinem unteren Bereich einen Kranz von vier jeweils um 90° versetzten Fenstern 12 zum radialen Wasserdurchtritt auf. Unterhalb des Fensterkranzes 12 bildet das Kopfstück 10 einen Ring 14, der eine zylindrische Innenfläche 16 zur Aufnahme einer Grundscheibe 22 bildet, über der eine dagegen drehbare Steuerscheibe 18 angeordnet ist.

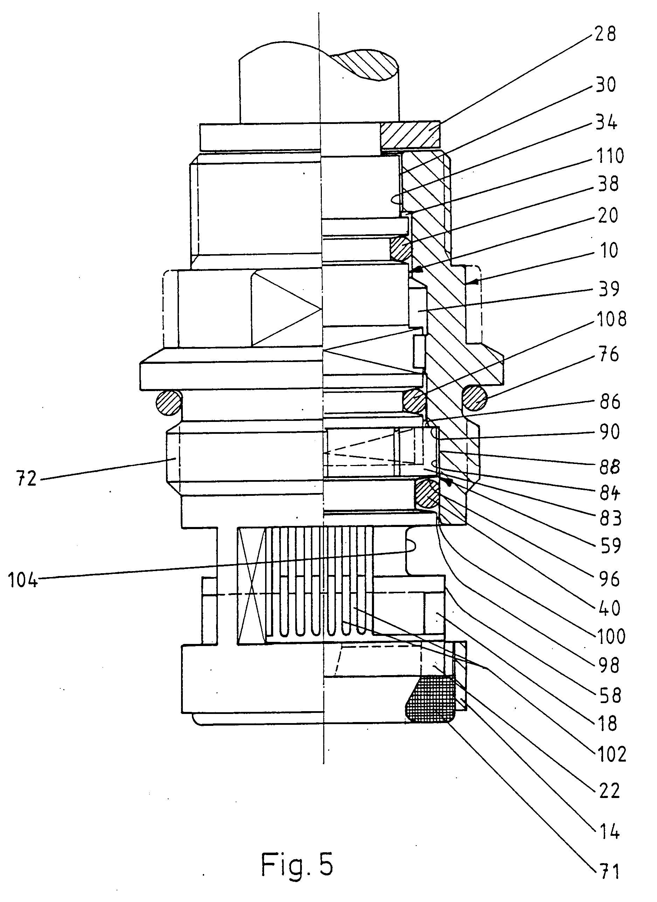

Die Spindel 20 weist an ihrem oberen Ende eine zum Aufstecken eines nicht dargestellten Betätigungsorgans dienende Riefenverzahnung 24 sowie eine Kreisrille 26 zur Verankerung einer Sicherungsscheibe 28 für die in das Kopfstück 10 eingesetzte Spindel 20 auf. Ein im oberen Bereich der Spindel 20 angeordneter Ringbund 30 liegt in der zusammengefügten Stellung gemäß Fig. 5 an einer entsprechenden Innenfläche 34 des Kopfstücks berührungsfrei, aber mit engen Toleranzen an und sorgt für eine gute Drehführung der Spindel 10 im oberen Teil des Kopfstücks 20. Unterhalb des Ringbundes 30 ist ein Dichtungs- und Radialführungsring 38 in der Spindel gelagert, der in zusammengesetztem Zustand gemäß Fig. 5 an der Innenwand des Kopfstücks 10 dichtend und führend anliegt.

Aus der unteren Stirnseite der Spindel 20 steht eine radial durch die Mittelachse 50 der Spindel verlaufende Mitnehmerrippe 52 vor, die in den beiden Anschlagstellungen der Spindel mit ihren radialen Enden 54 zwischen je zwei Fenstern 12 des Kopfstücks 10 angeordnet ist. Dadurch behindert sie den Fluß des durchströmenden Wassers nicht, ist jedoch dazu geeignet, in eine dafür vorgesehene Mitnehmernut 56 eines allgemein mit 57 bezeichneten einstückigen Bauteils aus gleitfähigem Material, z.B. Kunststoff, einzugreifen, der aus einem unteren Dämpfungsglied 58 und einem oberen Lagerelement 59 besteht. Dadurch wird das Bauteil 57 mit der Spindeldrehung mitgeführt. Auf einen Absatz 60 des Dämpfungsgliedes 58 ist die im wesentlichen kreisförmige Steuerscheibe 18 festsitzend aufgepaßt. An der Unterseite der Steuerscheibe 18 liegt plan die Grundscheibe 22 an, die im Kopfstück 10 gegen Drehung festgelegt ist. Zur Abdichtung gegen das Gehäuse einer im übrigen nicht dargestellten Armatur, in die das Ventiloberteil eingesetzt werden soll, wird unterhalb der Grundscheibe 22 ein aus dem unteren Ende des Ventiloberteils leicht vorstehender Dichtungsring 71 eingefügt. Ferner weist das Kopfstück 10 zu diesem Zweck ein übliches Außengewinde 72 und einen an einem Anschlagring 74 anliegenden äußeren Dichtungsring 76 auf.

Ein Bund 80 am unteren Ende der Spindel 20 ist in eine Ausnehmung 82 des Lagerelements 59 bündig eingesetzt. Das Lagerelement 59 weist einen Gleitring 83 mit einer zylindrischen radialen Stützfläche 84 und einer nach oben weisenden kreisringförmigen axialen Stützfläche 86 auf, die sich an entsprechenden inneren Gleitflächen 88 bzw. 90 des Kopfstücks 10 abstützen. In der axialen Stützfläche 86 ist ein Kranz von radial verlaufenden Schmiernuten 92 vorgesehen, die am äußeren Rand jeweils in axial verlaufende Schmiernuten 94 übergehen, die in der radialen Stützfläche 84 angeordnet sind. Unterhalb des Gleitrings 83 weist das Lagerelement 59 eine ringförmige Nut 96 auf, in welcher ein Dichtungs- und Radialführungsring 40 angeordnet ist. An die Nut 96 schließt sich nach unten ein zur radialen Stützfläche 84 koaxialer Stützflächenabschnitt 98 an, der sich an einem entsprechenden inneren Gleitflächenabschnitt 100 des Kopfstücks 10 abstützen könnte. Da der gesamte Bauteil 57 mit dem Lagerelement 59 und dem Dämpfungsglied 58 aus Kunststoff oder dergleichen besteht und überdies eine Schmierung der Stützflächen 84 und 86 erfolgt, ergibt sich eine hervorragende und verschleißarme Lagerung am unteren Ende der Spindel 20. Zwischen den Dichtungs- und Radialführungsringen 38 und 40 wird eine abgedichtete Fettkammer 39 gebildet, so daß die in diese Fettkammer eingebrachten Schmiermittel nicht durch Flüssigkeit ausgewaschen werden können. Die Montage des Bauteils 57 an der Spindel kann sehr einfach durch Aufstecken erfolgen.

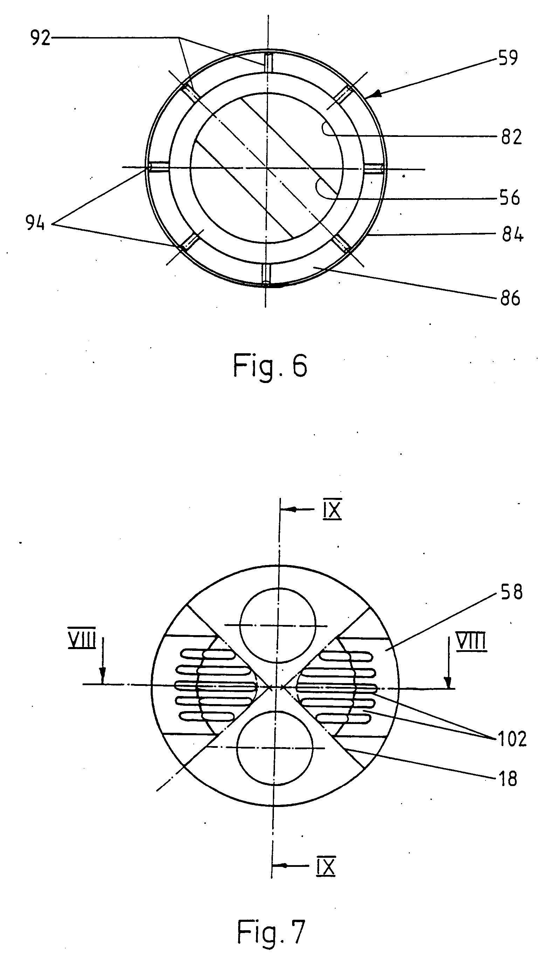

Den unteren Abschnitt des einstückig aus Kunststoff oder dergleichen hergestellten Bauteils 57 bildet das Dämpfungsglied 58, das außer geräuschdämpfenden Dämpfungsrippen 102 zur weiteren Geräuschdämpfung einen ringnutförmigen Ausströmkanal 104 und diesem zugeordnete Führungskanäle 106 mit schräg geneigten Anströmflächen aufweist. In der Unteransicht der Figur 7 ist überdies die Form der auf das Dämpfungsglied 58 aufgesetzten Steuerscheibe 18 angedeutet. Aus dieser Anordung ist zu entnehmen, daß bei dem dargestellten Ventiloberteil die Spindel zwischen der Öffnungs- und Schließstellung des Ventils um 90° drehbar ist. Grundsätzlich sind bei anderer Anordnung der Öffnungen der Grundscheibe 22 und kleineren Modifikationen alle beliebigen Schließwinkelvariationen möglich, so z.B. eine 180°-Schließwinkelausführung.

Zur weiteren Führung und eventuell zur Erzielung einer größeren Selbsthemmung gegen die Drehbewegung der Spindel ist bei der dargestellten Ausführungsform ein weiterer Dichtungs- und Radialführungsring 108 innerhalb der von den Dichtungsringen 38 und 40 gebildeten Fettkammer auf der Spindel 20 vorgesehen. Unterhalb des Bundes 30 ist ferner ein weiterer Gleitring 110 zur axialen und radialen Abstützung der Spindel 20 im Kopfstück 10 vorgesehen.

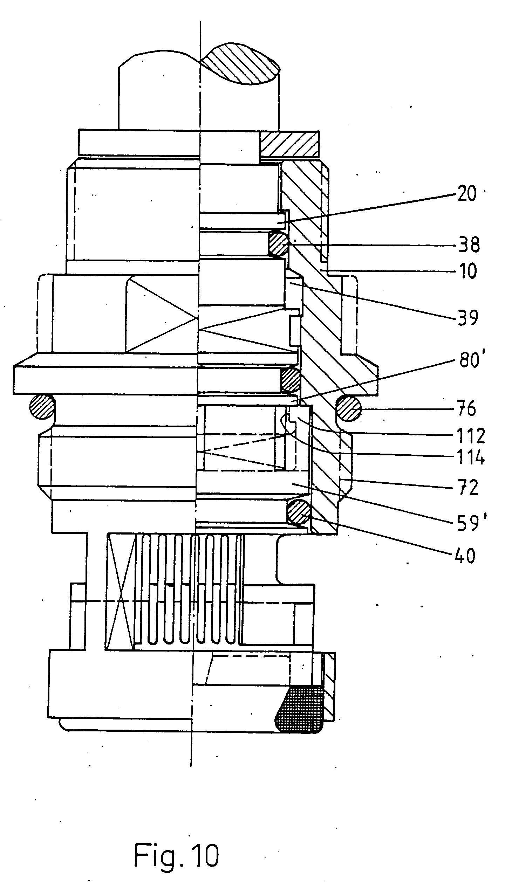

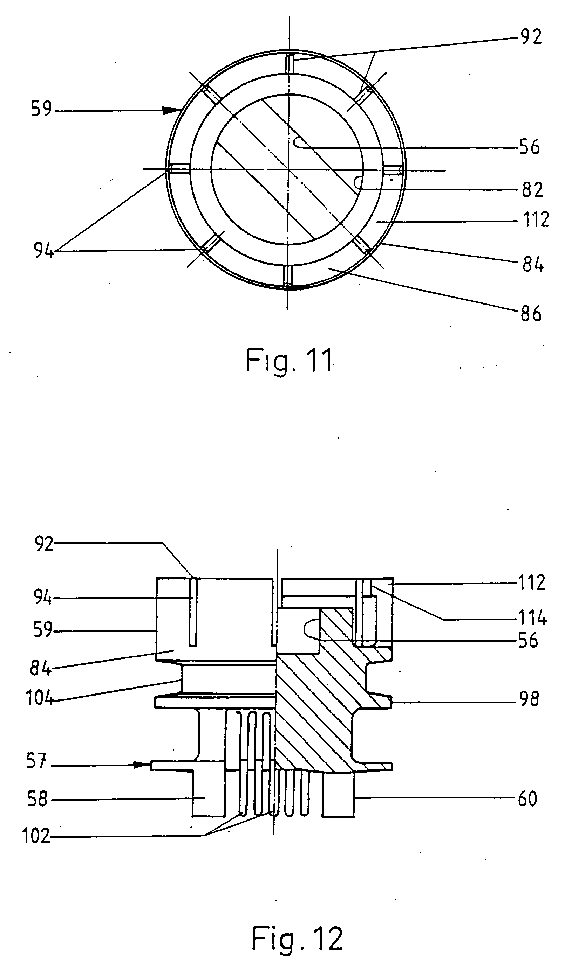

Die in den Figuren 10 bis 12 dargestellte zweite Ausführungsform der Erfindung, welche ebenfalls alle in Figur 1 gezeigten Teile enthält, unterscheidet sich von der ersten Ausführungsform gemäß Figuren 5 bis 9 nur durch die im folgenden geschilderten Merkmale. Im übrigen sind für gleiche Teile die gleichen Bezugszeichen verwendet wie für die erste Ausführungsform.

Bei der zweiten Ausführungsform ist das Lagerelement 59′ mit einem kreisringförmigen elastischen Schnappring 112 versehen, der in eine entsprechende ringförmige Aussparung 114 des Bundes 80′ am unteren Ende der Spindel 10 eingeschnappt werden kann. Gleichzeitig wird die Mitnehmerrippe 52 in die dafür vorgesehene Mitnehmernut 56 eingesetzt. Dadurch ergibt sich eine sehr einfach zu montierende axiale und radiale Festlegung des Lagerelements 59′ an der Spindel 10.

## Patentansprüche

1. Ventiloberteil, insbesondere für Wasser-Armaturen, das ein gehäuseartiges Kopfstück (10), eine in diesem zwischen zwei Anschlagstellungen drehbar angeordnete Spindel (20) und eine durch zwei Dichtringe (38, 40) gegen Flüssigkeit abgedichtete Fettkammer (39) im Innern des Kopfstücks (10) aufweist,**dadurch** **gekennzeichnet**, daß das untere Ende (52,80) der Spindel (20) mittels eines Lagerelements (59) aus gleitfähigem Material, vorzugsweise Kunststoff, im Kopfstück (10) gelagert ist, wobei je eine axiale (86) und eine radiale Stützfläche (84) eines Gleitrings (83) des Lagerelements (59) an entsprechenden inneren Gleitflächen (90,88) des Kopfstücks (10) abgestützt sind, daß eine drehfeste Verbindung (52,56) zwischen Spindel (20) und Lagerelement (59) besteht und daß der Gleitring (83) des Lagerelements (59) innerhalb der abgedichteten Fettkammer (39) angeordnet ist.

2. Ventiloberteil nach Anspruch 1, dadurch gekennzeichnet, daß das Lagerelement (59) mit einem in den Flüssigkeitsbereich des Ventils ragenden, Dämpfungsrippen (102) aufweisenden Dämpfungsglied (58) aus Kunststoff einstückig ausgebildet ist.

3. Ventiloberteil nach Anspruch 1 oder 2, dadurch gekennzeichnet, daß zur drehfesten Verbindung die Spindel (20) mit einer Mitnehmerrippe (52) in eine entsprechende Mitnehmernut (56) des Lagerelements (59) eingreift und/oder zwischen Spindel (20) und Lagerelement (59) eine gegenseitig einrastende Schnappverbindung (112, 114) vorgesehen ist.

4. Ventiloberteil nach einem der vorangehenden Ansprüche, dadurch gekennzeichnet, daß in der axialen Stützfläche (86) und in der radialen Stützfläche (84) Schmiernuten (92,94) vorgesehen sind.

5. Ventiloberteil nach Anspruch 4, dadurch gekennzeichnet, daß die Schmiernuten (92,94) in der axialen Stützfläche (86) radial und in der radialen Stützfläche (84) axial verlaufen und jeweils ineinander übergehen.

6. Ventiloberteil nach einem der vorangehenden Ansprüche, dadurch gekennzeichnet, daß die radiale Stützfläche (84) des Gleitrings (83) durch einen außerhalb der Fettkammer (39) an einer Nut (96) für den Dichtungsring (40) anschließend angeordneten radialen Stützflächenabschnitt (98) koaxial fortgesetzt ist, der an einem entsprechenden inneren Gleitflächenabschnitt (100) des Kopfstücks (10) abgestützt ist.

7. Ventiloberteil nach einem der vorangehenden Ansprüche, dadurch gekennzeichnet, daß zur Erhöhung der Reibung zwischen Spindel (20) und Kopfstück (10) innerhalb der durch zwei Dichtungsringe (38,40) abgedichteten Fettkammer (39) ein mittlerer O-Ring (108) vorgesehen ist.

8. Ventiloberteil nach einem der Ansprüche 2 bis 7, dadurch gekennzeichnet, daß das Dämpfungsglied (58) im Bereich der Dämpfungsrippen (102) einen ringnutförmigen Ausströmkanal (104) aufweist.

9. Ventiloberteil nach Anspruch 8, dadurch gekennzeichnet, daß dem Ausströmkanal (104) ein Führungskanal (106) mit schräg geneigten Anströmflächen zugeordnet ist.

## Claims

1. A valve top, in particular for water fittings, which comprises a housing-like head piece (10), a stem (20) rotatably housed therein between two stop positions and a grease chamber (39), sealed by two sealing rings (38, 40) against fluid, inside the head piece (10),
**characterised in that** the lower end (52, 80) of the stem (20) is mounted by means of a bearing element (59) made from slippery material, preferably plastic, in the head piece (10), whereby one axial (86) and one radial supporting surface (84) of a sliding ring (83) of the bearing element (59) are supported on corresponding inner sliding faces (90, 98) of the head piece (10),
**in that** a rotationally secure connection (52, 56) exists between the stem (20) and bearing element (59),
**and in that** the sliding ring (83) of the bearing element (59) is disposed inside the sealed grease chamber (39).

2. A valve top according to Claim 1,
**characterised in that** the bearing element (59) having a damping member (58) protruding into the fluid region of the valve and comprising damping ribs (102) is constructed in one piece from plastic.

3. A valve top according to Claim 1 or 2,
**characterised in that** for the rotationally secure connection the stem (20) engages with a driving rib (52) in a corresponding driving slot (56) of the bearing element (59) and/or between stem (20) and bearing element (59) there is provided a mutually engaging snap connection (112, 114).

4. A valve top according to one of the preceding Claims,
**characterised in that** oil grooves (92, 94) are provided in the axial supporting surface (86) and in the radial supporting surface (84).

5. A valve top according to Claim 4,
**characterised in that** the oil grooves (92, 94) extend radially in the axial supporting surface (86) and extend axially in the radial supporting surface (84) and run into one another.

6. A valve top according to one of the preceding Claims,
**characterised in that** the radial supporting surface (84) of the sliding ring (83) is coaxially continued by a radial supporting surface portion (90), which is disposed outside the grease chamber (39) adjoining a groove (93) for the sealing ring (40), and which is supported on a corresponding inner sliding surface portion (100) of the head piece (10).

7. A valve top according to one of the preceding Claims,
**characterised in that** to increase the friction between stem (20) and head piece (10) a central O-ring (108) is provided inside the grease chamber (39) sealed by two sealing rings (38, 40).

8. A valve top according to one of Claims 2 to 7,
**characterised in that** the damping member (58) comprises a discharge duct (104) in the shape of an annular groove in the region of the damping ribs (102).

9. A valve top according to Claim 8,
**characterised in that** to the discharge duct (104) is associated a guide duct (106) having obliquely inclined approach flow faces.

## Revendications

1. Partie supérieure de soupape, destinée en particulier pour robinets à eau, comprenant une tête (10) en forme de boîtier, une tige (20) pouvant tourner dans cette tête entre deux positions de butée, une chambre à graisse logée (39) dans la tête et isolée du liquide par deux bagues d'étanchéité (38, 40), caractérisée en ce que l'extrémité inférieure (52, 80) de la tige (20) est maintenue dans la tête (10) par un élément de palier (59) fait d'un matériau à bon coefficient de glissement, de préférence un matériau en matière plastique, à élément s'appuyant par des surfaces d'appui axiale (86) et radiale (84) d'une bague de glissement de l'élément de palier (59) respectivement sur des surfaces internes de glissement correspondantes (90, 88) de la tête, l'élément de palier (59) et la tige étant solidaires en rotation et portant une bague de glissement (83) logée à l'intérieur de la chambre à graisse étanche (39).

2. Partie supérieure de soupape selon la revendication, caractérisée en ce que l'élément de palier (59) est constitué en une seule pièce en matière plastique avec l'organe d'amortissement (58) équipé de nervures d'amortissement (102) faisant saillie au niveau du liquide de la soupape.

3. Partie supérieure de soupape selon la revendication 1 ou 2, caractérisé en ce que pour bloquer la liaison en rotation, la broche (20) porte une nervure d'entraînement (52) engrenant dans une rainure d'entraînement (56) correspondante de l'élément de palier (59), une liaison par encliquetage (112, 114) étant prévue, pour bloquer la tige (20) et l'élément de palier l'un sur l'autre.

4. Partie supérieure de soupape selon l'une des revendications précédentes, caractérisée en ce que des rainures de graissage (92, 94) sont prévues sur la surface d'appui axial (86) et sur la surface d'appui radial (84).

5. Partie supérieure de soupape selon la revendication, caractérisée en ce que les rainures de graissage (92, 94) pratiquées dans la surface d'appui axial (86) sont radiales, celles (94) pratiquées dans la surface d'appui radial (84) sont axiales, ces rainures (92, 94) étant raccordées deux par deux.

6. Partie supérieure de soupape selon l'une des revendications précédentes, caractérisée en ce que la surface d'appui radial (84) de l'anneau de glissement (83) est prolongée, à l'opposé de la chambre à graisse, par une surface coaxiale complémentaire d'appui radial (98) faisant suite à une gorge (96) contenant la bague d'étanchéité (40) et s'appuyant sur une partie correspondante (100), de la surface interne de glissement de la tête (10).

7. Partie supérieure de la soupape selon l'une des revendications précédentes, caractérisée en ce que, pour accroître le frottement entre la tige (20) et la tête (10), une bague intermédiaire du type anneau taurique est montée dans la chambre à graisse (39) entre les joints d'étanchéité (38, 40).

8. Partie supérieure de soupape selon l'une des revendications 2 à 7, caractérisée en ce que l'organe d'amortissement (58) présente, au niveau des nervures d'amortissement (102) un canal de sortie (104) en forme de gorge circulaire.

9. Partie supérieure de soupape selon la revendication 6, caractérisée en ce que le canal de sortie (104) est raccordé à un canal de guidage (106) à parois obliques.
